# NOUVEAU FASCICULE DE BREVET EUROPEEN

(11) **EP 1 814 964 B2**
(45) Date de publication et mention de la décision concernant l'opposition: **28.10.2015**
(45) Mention de la délivrance du brevet: 08.09.2010
(21) Numéro de dépôt: 05817155.4
(22) Date de dépôt: 16.11.2005
(51) Int. Cl.: C10G 2/00, B01J 8/00

(54) **DISPOSITIF DE PRODUCTION D'HYDROCARBURES LIQUIDES PAR SYNTHESE FISCHER-TROPSCH DANS UN REACTEUR A LIT TRIPHASIQUE**
VORRICHTUNG ZUR HERSTELLUNG FLÜSSIGER KOHLENWASSERSTOFFE DURCH FISCHER-TROPSCH-SYNTHESE IN EINEM DREIPHASENBETTREAKTOR
DEVICE FOR PRODUCING LIQUID HYDROCARBONS BY FISCHER-TROPSCH SYNTHESIS IN A THREE-PHASE BED REACTOR

(30) Priorité: 17.11.2004 FR 0412207
(43) Date de publication de la demande: 08.08.2007
(73) Titulaire: IFP Énergies nouvelles, 92852 Rueil-Malmaison Cedex (FR); ENI S.p.A., 00144 Rome (IT)
(72) Inventeur: BRUNARD, Nathalie, F-69630 Chaponost (FR); SCHWEITZLER, Jean-Marc, F-38200 Villette de Vienne (FR)
(74) Mandataire: Cabinet Plasseraud
(86) Numéro de dépôt international: PCT/FR2005/002849
(87) Numéro de publication internationale: WO 2006/053982

(56) Documents cités:
- EP-A- 1 338 320
- WO-A1-97/31693
- WO-A1-99/03574
- AU-A- 6 245 873
- GB-A- 2 130 111
- GB-A- 2 281 224
- GB-A- 2 403 433
- GB-A- 2 403 728
- US-A- 5 382 748
- US-A- 5 422 375
- US-A- 5 811 469
- US-A- 5 844 006
- US-B1- 6 762 209
- SCHLESINGER ET AL: 'Fischer-Tropsch Synthesis in Slurry Phase' INDUSTRIAL AND ENGINEERING CHEMISTRY vol. 43, no. 6, Juin 1951, pages 1474 - 1479
- 'Kirk-Othmer Encyclopedia o Chemical Technology', vol. 10, 1993, JOHN WILEY & SONS pages 841 - 847

## Description

### Domaine de l'invention

L'invention concerne le domaine des dispositifs de production d'hydrocarbures liquides par synthèse Fischer-Tropsch équipés de moyens de filtration permettant de séparer les produits liquides, issus de la réaction de synthèse, des particules solides de catalyseur. Elle concerne, plus particulièrement, un dispositif dans lequel les moyens de filtration sont mis en oeuvre à l'intérieur même d'un réacteur à lit triphasique.

### Art antérieur

La synthèse d'hydrocarbures à partir d'un mélange comportant du monoxyde de carbone et de l'hydrogène, plus communément appelé gaz de synthèse, est connue depuis longtemps.

On peut citer, en particulier, les travaux de F. Fischer et H. Tropsch qui, dès 1923, ont donné leur nom à cette transformation chimique, bien connue sous le nom de synthèse Fischer-Tropsch. La synthèse Fischer-Tropsch est une réaction qui permet de synthétiser des hydrocarbures liquides paraffiniques, oléfiniques et/ou des dérivés oxygénés à partir d'un gaz de synthèse, ce dernier étant par exemple obtenu à partir de gaz naturel ou de charbon. Cette réaction, exploitée industriellement en Europe pendant la seconde guerre mondiale et également en Afrique du Sud depuis les années 1950, a retrouvé un spectaculaire regain d'intérêt depuis les années 1980 à 1990, suite aux évolutions des coûts du pétrole et du gaz, mais aussi pour des aspects environnementaux.

Les dispositifs de production utilisés pour la synthèse Fischer-Tropsch comportent généralement des moyens permettant de séparer le produit liquide de synthèse du catalyseur qui se présente sous la forme de particules solides.

Le brevet américain US 5,844,006 décrit un procédé de production d'un liquide par réaction d'un gaz sur un catalyseur maintenu en suspension par ce liquide dans un réacteur de type colonne à bulles, plus communément connu sous l'expression anglo-saxonne « slurry bed reactor », dans lequel le produit liquide est séparé des particules solides de catalyseur par passage, dans une zone de filtration du lit, du produit liquide à travers un média filtrant dans une première direction de filtration de façon à former un gâteau de particules solide sur ledit média filtrant. Ce brevet décrit plus particulièrement, une séquence comportant le passage du liquide dans la première direction de filtration, l'interruption du passage du liquide et le rinçage par passage d'un fluide de rinçage dans une deuxième direction opposée à la première.

Ce brevet divulgue, en particulier, des cartouches filtrantes présentant une forme cylindrique et comportant un média filtrant renfermant une zone de collecte des produits liquides. Ces cartouches sont localisées dans une zone de filtration qui est, a priori, située n'importe où dans le réacteur.

### Résumé de l'invention

Un objet de la présente invention est de fournir des moyens de filtration mettant en oeuvre au moins une cartouche filtrante localisée à l'intérieur même du réacteur à lit triphasique et permettant de minimiser, voire d'éliminer, la formation d'un gâteau de particules solides à la surface du filtre.

Un autre objet de l'invention est de tirer partie des régimes d'écoulement au sein du lit triphasique pour améliorer l'opération des cartouches filtrantes, et en particulier, maximiser l'érosion du gâteau de particules solides éventuellement formé à la surface du filtre.

Un autre objet de l'invention est de stabiliser le débit de filtrat s'écoulant à travers les filtres.

Un objet d'un mode de réalisation de l'invention est d'optimiser le compromis entre une maximisation de la surface de filtration et une minimisation de l'encombrement des cartouches filtrantes dans le lit triphasique.

L'invention porte donc sur un dispositif de production d'hydrocarbures liquides par synthèse Fischer-Tropsch, sur des particules solides de catalyseur, dans un réacteur à lit triphasique, ledit dispositif étant équipé de moyens de filtration destinés à séparer un filtrat desdites particules solides de catalyseur à l'aide d'au moins une cartouche filtrante disposée dans le lit triphasique. La ou chacune des cartouches filtrantes de l'invention présente une configuration améliorée conférant au dispositif la réalisation d'au moins un des objets précités.

Un mode de réalisation préférée du dispositif de l'invention porte sur un positionnement spécifique de la, ou de chaque, cartouche à l'intérieur du réacteur, conférant au dispositif des avantages supplémentaires répondant à au moins un des objets précités.

La description et les figures présentées ci-après permettent d'illustrer plus clairement les modes de réalisation du dispositif de l'invention et font apparaître l'ensemble des avantages associés à la mise en oeuvre du dispositif.

### Brève description des figures

Les Figures 1.a et 1.b représentent, de manière non limitative, un mode de réalisation simplifié d'une cartouche filtrante du dispositif de l'invention.
La Figure 2 représente, de manière non limitative, un mode de réalisation du dispositif de l'invention comportant le réacteur à lit triphasique et la disposition sur quatre niveaux d'une pluralité de cartouches filtrantes à l'intérieur de ce lit.
La Figure 3 représente, de manière non limitative, un autre mode de réalisation du dispositif de l'invention dans lequel les cartouches sont disposées sur un seul niveau à l'intérieur du lit triphasique.

### Description détaillée de l'invention

L'invention porte donc sur un dispositif de production d'hydrocarbures liquides par synthèse Fischer-Tropsch sur des particules solides de catalyseur dans un réacteur à lit triphasique, le dispositif étant équipé de moyens de filtration destinés à séparer un filtrat des particules solides de catalyseur, lesdits moyens comportant au moins une cartouche filtrante montée dans une zone de filtration à l'intérieur dudit réacteur, la cartouche filtrante comportant:
- un filtre destiné à séparer le filtrat des particules solides de catalyseur,
- une enveloppe cylindrique,
- un élément interne ayant la forme d'un cylindre creux ouvert à ses extrémités et monté de façon substantiellement coaxiale par rapport à l'axe longitudinal de l'enveloppe,
- une chambre annulaire délimitée par l'enveloppe et les parois de l'élément interne, ladite chambre étant destinée à recueillir le filtrat, et
- un conduit d'évacuation dudit filtrat.

Dans le dispositif selon l'invention, les parois de l'élément interne de la cartouche filtrante sont, au moins en partie, constituées par le filtre de la cartouche.

En d'autres termes, les parois de l'élément interne constituent, au moins partiellement, les parois filtrantes de la cartouche.

Par filtre, on entend généralement le matériau filtrant ou le média filtrant en tant que tel, celui-ci se présentant généralement sous la forme d'une couche ou de plusieurs couches de matériaux ayant la capacité de laisser passer le filtrat et d'arrêter les particules solides de catalyseur.

Par filtrat, on entend généralement les composés passant à travers le filtre, c'est à dire, entre autres, les hydrocarbures liquides produits par synthèse Fischer-Tropsch. Le filtrat peut également inclure d'autres composés liquides ou gazeux, par exemple le gaz de synthèse utilisé comme réactif, ainsi que d'éventuelles particules solides présentant généralement une taille très inférieure à la taille moyenne des particules solides du lit de catalyseur. La notion de filtrat est intimement liée au filtre utilisé qui peut être plus ou moins sélectif par rapport aux composés dudit filtrat.

La cartouche filtrante du dispositif de l'invention est configurée de manière à diriger l'écoulement des hydrocarbures liquides et des particules solides de catalyseur tangentiellement aux parois filtrantes de l'élément interne de la cartouche de sorte que, dans le cas où un gâteau de particules solides se formerait, le siège d'un tel gâteau serait les parois filtrantes de l'élément interne à l'intérieur même de la cartouche.

La cartouche filtrante de l'invention peut être ainsi qualifiée de « Interne-Externe », pour mettre en avant que le filtrat passe de l'intérieur de la cartouche, à travers les parois filtrantes de l'élément interne, avant d'être évacué vers l'extérieur dans la chambre annulaire. Ce type de cartouche est bien différent de celui de l'art antérieur, qui peut être qualifiées de « Externe-Interne », c'est à dire pour lequel le filtrat circule de l'extérieur de la cartouche, à travers les parois filtrantes de l'enveloppe de celle-ci, avant d'être évacué vers l'intérieur dans une chambre de collecte du filtrat.

Par cette configuration « Interne-Externe » spécifique à l'invention, la formation d'un gâteau peut être évitée, ou tout au moins limitée, grâce au confinement régnant à l'intérieur dudit élément interne et grâce aux turbulences générées par le régime d'écoulement régnant dans la zone de filtration du réacteur.

Cette configuration de la cartouche filtrante permet également de stabiliser le débit de filtrat au cours du temps. En effet, l'absence de formation d'un gâteau, ou la limitation de l'épaisseur de ce dernier, permet de limiter les variations de la pression différentielle à travers le filtre.

Selon un mode préférée de l'invention, la cartouche filtrante est positionnée de manière à ce que son axe longitudinal soit parallèle à l'axe longitudinal du réacteur.

Dans cette configuration, la circulation des hydrocarbures liquides et des particules solides de catalyseur est réalisée de manière substantiellement tangentielle par rapport à l'axe longitudinal de la cartouche filtrante, ce qui permet un balayage continu des parois de l'élément interne. Ainsi, la formation du gâteau peut être évitée ou tout au moins minimisée.

Selon l'invention, la zone de filtration correspond à un espace annulaire dans le lit triphasique dudit réacteur; ledit espace annulaire étant délimité par un rayon, déterminé par rapport à l'axe longitudinal du réacteur, compris entre 0,7*R et R, R étant le rayon interne du réacteur.

Ceci permet de maximiser le balayage des parois filtrantes de l'élément interne. En effet, sans faire référence à une quelconque théorie, il a été remarqué que les flux de particules solides et d'hydrocarbures liquides dans la partie périphérique du lit triphasique sont généralement descendants, ce qui permet d'accélérer l'érosion de tout gâteau de particules solides qui aurait tendance à se former à l'intérieur de la cartouche filtrante.

Ceci permet également d'optimiser le compromis entre une surface de filtration maximisée et un encombrement minimisé des cartouches dans le lit triphasique.

De manière générale, le régime d'écoulement dans le réacteur est celui d'un lit triphasique. Par lit triphasique on entend une zone comportant une phase liquide, une phase gazeuse et une phase solide, en l'occurrence le catalyseur, dans lesquels le solide est maintenu en suspension. II peut s'agir, par exemple, d'un lit fluidisé ou d'un lit bouillonnant. Il peut s'agir avantageusement d'un lit de type « slurry », plus connu sous l'appellation anglo-saxonne de « slurry bed », ou d'une colonne à bulles, dans lequel les particules solides sont généralement réparties sur toute la hauteur du lit.

Le dispositif de l'invention comporte généralement une pluralité de cartouches filtrantes. Le nombre de cartouches peut être déterminé en fonction, entre autres, de la surface de filtration nécessaire, de la taille des cartouches et de l'encombrement de ces cartouches dans le réacteur.

De préférence, une pluralité de cartouches filtrantes est répartie autour de l'axe longitudinal du réacteur, en périphérie dudit réacteur et sur une même position radiale. Ce positionnement permet d'assurer des conditions hydrodynamiques identiques autour de chaque cartouche. Le rayon de la position des cartouches, par rapport à l'axe longitudinal du réacteur, peut être optimisé en prenant en compte les profils de vitesse d'écoulement des hydrocarbures liquides et des particules solides. Il peut également être envisagé de répartir les cartouches filtrantes sur deux ou plusieurs positions radiales autour de l'axe longitudinal du réacteur.

Selon un mode de réalisation, plusieurs étages de cartouches filtrantes sont répartis à différents niveaux dans le lit du réacteur.

Selon un autre mode de réalisation, les cartouches filtrantes sont réparties sur un seul niveau.

De manière encore plus préférée, l'étage ou chaque étage de cartouches filtrantes est disposé dans la partie haute du lit. Les étages de cartouches filtrantes sont avantageusement disposés dans les trois quarts supérieurs du lit, voire dans la moitié supérieure du lit, ou encore dans le quart supérieur du lit.

Les réacteurs de synthèse Fischer-Tropsch comportent généralement un ou plusieurs échangeurs de chaleur. Ces échangeurs sont, de préférence, tubulaires. Afin de permettre le démantèlement des faisceaux de tubes pour effectuer la maintenance de ces échangeurs, on préfère localiser le ou les échangeurs de chaleur le long de l'axe longitudinal du réacteur, et disposer les cartouches à la périphérie du lit triphasique dudit réacteur.

Il peut être avantageux de localiser les cartouches filtrantes de manière à minimiser toute perturbation des conditions hydrodynamiques du lit triphasique. De préférence, les cartouches filtrantes sont positionnées à la proche périphérie du ou des échangeurs de chaleur. De préférence, l'écartement entre les cartouches filtrantes et les tubes du ou des échangeurs est compris entre 1 et 15 cm, de manière préférée entre 3 et 10 cm, par exemple entre 5 et 8 cm.

Pour mettre en oeuvre le dispositif de l'invention il peut être nécessaire de déterminer là surface totale de filtre ou surface totale de filtration. Cette surface peut être déterminée en fonction du flux de filtration des filtres, à savoir le débit de filtrat par unité de surface de filtre.

Le flux de filtration des cartouches filtrantes utilisées peut varier de 250 à 1000 1/h.m² (litre par heure et par mètre carré), de préférence de 350 à 700 l/h.m², de manière plus préférée de 400 à 600 l/h.m².

Le filtre peut être réalisé à partir de tout matériau filtrant connu de l'homme du métier, en particulier ceux résistant à une température pouvant aller jusqu'à 300 °C. De préférence, le filtre est réalisé dans un ou plusieurs matériaux choisis dans le groupe constitués par les inox ou les aciers carbone. Le filtre peut être, par exemple, réalisé en toile métallique tissée, en fibres métalliques frittées ou spiralées, en toile perforée, en toile de particules métalliques frittées, ou bien encore en céramique poreuse.

Ces filtres peuvent être caractérisés par un seuil de filtration. Le choix du seuil de filtration est généralement réalisé en tenant compte de la taille des grains de catalyseur à retenir. Le seuil de filtration du filtre est, de préférence, compris entre 1 et 100 µm, de manière plus préférée entre 5 et 20 µm.

Lors de la mise en oeuvre du dispositif de l'invention, la formation d'un gâteau de particules solides de catalyseur sur les parois filtrantes de l'élément interne est évitée, ou au moins limitée, du fait de l'érosion générée par l'écoulement tangentiel des hydrocarbures liquides et des particules solides le long desdites parois.

La vitesse d'écoulement tangentiel le long des parois du filtre de l'élément interne peut aller de 0,5 à 10 mètres par seconde (m/s), de préférence de 1 à 7 m/s, de manière plus préférée de 2 à 5 m/s.

Les particules solides de catalyseur dans le gâteau déposées sur les parois filtrantes de l'élément interne ne participent généralement pas à la réaction de synthèse Fischer- Tropsch, ce qui entraîne une diminution de la conversion.

Lors de la mise en oeuvre du dispositif, la proportion de particules solides de catalyseur dans le gâteau par rapport à la totalité du catalyseur dans le réacteur est, de préférence inférieure à 2 %, de manière plus préférée inférieure à 1 %, de manière encore plus préférée inférieure à 0,5 % en poids.

Le catalyseur mis en oeuvre dans le réacteur est généralement tout solide catalytique connu de l'homme du métier permettant de réaliser la synthèse Fischer-Tropsch. De préférence, le catalyseur est à base de cobalt ou de fer, de manière plus préférée à base de cobalt.

Le catalyseur mis en oeuvre dans le réacteur est généralement un catalyseur supporté. Le support peut être, à titre d'exemple, à base d'alumine, de silice ou de titane.

En plus des cartouches filtrantes, les moyens de filtration selon l'invention peuvent comporter une conduite de soutirage du filtrat et une recette pour collecter ledit filtrat.

Un avantage du dispositif selon l'invention est que les moyens de filtration sont montés à l'intérieur même du réacteur, ce qui permet d'éviter l'utilisation d'une boucle de circulation extérieure, cette dernière pouvant être source de bouchage, de perte de catalyseur et d'attrition du catalyseur.

Un autre avantage du dispositif selon l'invention est lié à la stabilité du débit de filtrat et à la minimisation du nombre de rinçages ou de rétro-lavages par circulation d'un fluide à travers le filtre dans le sens opposé à celui de la filtration.

Un avantage supplémentaire du dispositif de l'invention est lié à la réduction des coûts de l'ensemble des équipements par rapport aux schémas de l'art antérieur.

### Description détaillée des figures

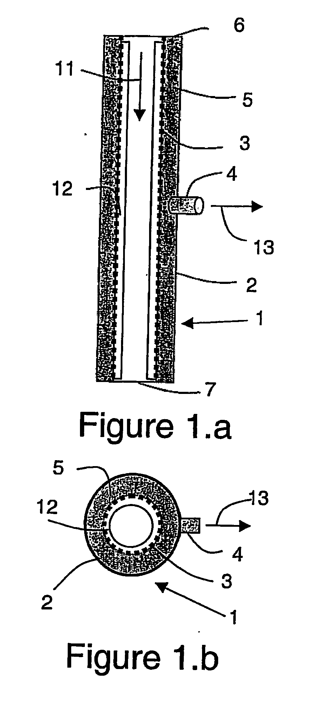

Les Figures 1.a et 1.b représentent une cartouche filtrante 1 du dispositif de l'invention. Les Figures 1.a et 1.b sont des vues en coupe de la cartouche filtrante respectivement longitudinale et transversale. La cartouche 1 comporte une enveloppe externe 2 de forme cylindrique et un élément interne 3 qui correspond à un tube creux ouvert à ses extrémités. L'élément interne 3 est disposé de manière coaxiale par rapport à l'enveloppe 2. La cartouche comporte, en outre, un conduit d'évacuation 4.

Une chambre annulaire 5 est formée dans l'espace délimité par les parois de l'élément interne 3 et celles de l'enveloppe externe 2 de la cartouche. La chambre 5 est fermée à ses deux extrémités 6 et 7.

Le filtre est, dans ce mode de réalisation, constitué par les parois cylindriques de l'élément interne 3.

Les hydrocarbures liquides et les particules solides de catalyseur circulent, grâce à l'écoulement en lit triphasique, vers l'intérieur du cylindre que constitue l'élément interne 3 selon une direction représentée par la flèche 11. Une partie du flux de liquide 11 passe à travers le filtre de la paroi de l'élément interne. Dans le cas de figure représenté, un gâteau 12 de particules solides est formé sur les parois filtrantes de l'élément interne de la cartouche. La partie non filtrée du flux d'hydrocarbures liquide ainsi que le flux de particules solides contribuent à l'érosion du gâteau à l'intérieur même de la cartouche, en limitant ainsi son épaisseur. Un flux de filtrat 13 est évacué via la chambre 5, par l'intermédiaire du conduit 4.

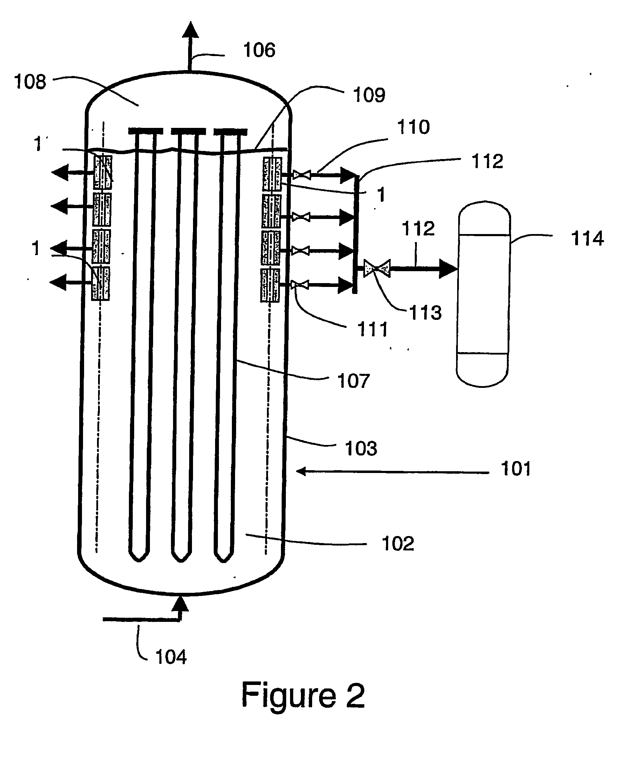

La Figure 2 représente un mode de réalisation du dispositif de l'invention comportant le réacteur 101 de synthèse Fischer-Tropsch à lit triphasique 102 et un ensemble de cartouches filtrantes 1 disposé sur quatre niveaux à l'intérieur de ce lit.

Le réacteur 101 comporte une enceinte 103, un conduit d'alimentation 104 en gaz de synthèse et un conduit d'évacuation 106 des gaz. A l'intérieur du réacteur sont disposés des échangeurs de chaleur tubulaires 107 sur toute la hauteur dudit réacteur. Le lit 102 est expansé par l'effet de la vitesse de gaz. Le lit 102 est couvert par une zone gazeuse 108 localisée au-dessus de l'interface 109.

Les cartouches filtrantes 1 sont disposées sur quatre niveaux près de la circonférence du réacteur 101. Chacune des cartouches est équipée d'une conduite d'évacuation 110 du filtrat de la chambre annulaire de ladite cartouche 1 vers l'extérieur du réacteur 101. Les conduites d'évacuation 110 sont elles-mêmes dotées de vannes 111 à ouverture rapide. Les conduites 110 sont reliées, par l'intermédiaire de conduites 112 dotées de vannes 113, à une recette 114 de collecte du filtrat.

Les cartouches filtrantes sont réparties sur un cercle, centré par rapport à l'axe longitudinal du réacteur, dont le rayon est compris entre 0,7 * R et R, R étant le rayon interne du réacteur.

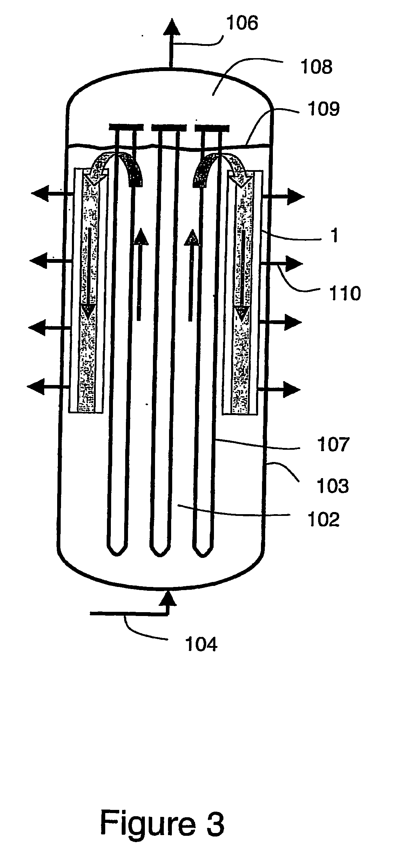

La Figure 3 représente un autre mode de réalisation du dispositif de l'invention dans lequel les cartouches sont disposées sur un seul niveau à l'intérieur du lit. Un grand nombre des composantes de la Figure 2 sont reproduites et référencées de la même façon.

### Exemple:

Les performances du dispositif de l'invention ont été évaluées à partir d'une extrapolation numérique sur la base du dispositif de la Figure 2 et d'expériences menées sur une maquette.

Lors de la partie expérimentale, une cartouche filtrante a été testée dans une maquette reproduisant la plupart des caractéristiques d'écoulement dans le réacteur de synthèse Fischer-Tropsch.

La cartouche filtrante ainsi testée présente une hauteur de 1 mètre et un diamètre de 0,07 mètre. Le filtre utilisé recouvre complètement les parois cylindriques de l'élément interne de la cartouche ou constitue l'essentiel de celles-ci. Le filtre est essentiellement constitué par une toile de filtration en inox. Le seuil de filtration du filtre est compris entre 0,5 et 50 µm.

La vitesse d'écoulement tangentiel des fluides liquides et des particules solides, au niveau de l'élément interne de la cartouche, a été maintenue entre 0,2 et 0,5 m/s. Cette expérience a permis de déterminer le flux de filtration des cartouches filtrantes ainsi testées qui est d'environ 0, 245 m³/h.m² (245 litres par heure et par mètre carré). Cette expérience a été menée dans des conditions conservatrices du fait que la vitesse d'écoulement tangentiel des fluides liquides et des particules solides dans un réacteur industriel est voisine de 2 m/s, voire au-delà, ce qui devrait générer une érosion encore plus grande de l'éventuel gâteau.

Ce résultat a permis l'extrapolation à un réacteur présentant une hauteur de 30 mètres et un diamètre interne de 10 mètres. Pour un débit de circulation d'hydrocarbures liquides de 30 tonnes par heure, le réacteur est équipé de 817 cartouches filtrantes, ce qui correspond à une surface totale de filtration de 180 m². Ces cartouches sont réparties sur 4 niveaux, dans la partie supérieure du lit triphasique, autour d'un cercle, centré par rapport à l'axe longitudinal du réacteur, de 9,6 mètres de diamètre. Sur un même niveau, les cartouches sont espacées d'une distance de 0,07 mètre. Les niveaux sont, quant à eux, espacés l'un par rapport à l'autre d'une hauteur de 0,3 mètre.

En supposant qu'un gâteau se forme au niveau de chaque cartouche filtrante et que ce gâteau ait une épaisseur comprise entre 1 mm et 3 cm, la masse totale de catalyseur dans le gâteau est comprise entre 180 et 5400 kg.

En considérant que la masse de catalyseur utilisé dans un réacteur de 30 mètres de haut et 10 mètres de large est d'environ 500 tonnes, le pourcentage de particules solides de catalyseur dans le gâteau est compris entre 0,036 % et 1,1 % en poids. De tels pourcentages n'ont que très peu d'impact sur la conversion.

## Revendications

1. Dispositif pour la production d'hydrocarbures liquides par synthèse Fischer-Tropsch sur des particules solides de catalyseur dans un réacteur à lit triphasique, ledit dispositif étant équipé de moyens de filtration destinés à séparer un filtrat des particules solides de catalyseur, lesdits moyens comportant au moins une cartouche filtrante montée dans une zone de filtration à l'intérieur dudit réacteur, la cartouche filtrante comportant:
- un filtre (3) destiné à séparer le filtrat des particules solides de catalyseur,
- une enveloppe cylindrique (2),
- un élément interne ayant la forme d'un cylindre creux ouvert à ses extrémités et monté de façon substantiellement coaxiale par rapport à l'axe longitudinal de l'enveloppe,
- une chambre annulaire (5) délimitée par l'enveloppe et les parois de l'élément interne, ladite chambre étant destinée à recueillir le filtrat, et
- un conduit d'évacuation (4) dudit filtrat,
dans lequel les parois de l'élément interne de la cartouche filtrante sont, au moins en partie, constituées par le filtre de la cartouche, et
dans lequel la zone de filtration correspond à un espace annulaire dans le lit triphasique dudit réacteur, ledit espace annulaire étant délimité par un rayon, déterminé par rapport à l'axe longitudinal du réacteur, compris entre 0,7*R et R, R étant le rayon interne du réacteur.

2. Dispositif selon la revendication 1, dans lequel la cartouche filtrante est positionnée de manière à ce que son axe longitudinal soit parallèle à l'axe longitudinal du réacteur.

3. Dispositif selon l'une quelconques des revendications 1 ou 2, dans lequel une pluralité de cartouches filtrantes est répartie autour de l'axe longitudinal du réacteur, en périphérie dudit réacteur et sur une même position radiale.

4. Dispositif selon l'une quelconques des revendications 1 à 3, dans lequel plusieurs étages de cartouches filtrantes sont répartis à différents niveaux dans le lit du réacteur.

5. Dispositif selon l'une quelconques des revendications 1 à 3, dans lequel les cartouches filtrantes sont réparties sur un seul niveau.

6. Dispositif selon l'une quelconques des revendications 1 à 5, dans lequel l'étage ou chaque étage de cartouches filtrantes est disposé dans la partie haute du lit.

7. Dispositif selon l'une quelconques des revendications 1 à 6, dans lequel le réacteur comporte un ou plusieurs échangeurs de chaleur.

8. Dispositif selon, la revendication 7, dans lequel le ou les échangeurs sont tubulaires.

9. Dispositif selon l'une quelconque des revendications 7 ou 8, dans lequel le ou les échangeurs de chaleur sont localisés le long de l'axe longitudinal du réacteur, et les cartouches filtrantes sont disposées à la périphérie du lit triphasique dudit réacteur.

10. Dispositif selon l'une quelconque des revendications 1 à 9, dans lequel le flux de filtration des cartouches filtrantes peut varier de 250 à 1000 l/h.m².

11. Dispositif selon l'une quelconque des revendications 1 à 10, dans lequel le filtre est réalisé dans un ou plusieurs matériaux choisis dans le groupe constitués par les inox ou les aciers carbone.

12. Dispositif selon l'une quelconque des revendications 1 à 11, dans lequel le seuil de filtration du filtre est compris entre 1 et 100 µm.

13. Dispositif selon l'une quelconque des revendications 1 à 12, dans lequel la vitesse d'écoulement tangentiel le long des parois du filtre de l'élément interne varie de 0,5 à 10 m/s.

14. Dispositif selon l'une quelconque des revendications 1 à 13, dans lequel il se forme un gâteau de particules solides, et la proportion de particules solides de catalyseur dans ledit gâteau par rapport à la totalité du catalyseur dans le réacteur est inférieure à 2 %.

15. Dispositif selon l'une quelconque des revendications 1 à 14, dans lequel le catalyseur est à base de cobalt ou de fer.

## Patentansprüche

1. Vorrichtung zur Herstellung flüssiger Kohlenwasserstoffe durch Fischer-Tropsch-Synthese auf Katalysatorfeststoffteilchen in einem Dreiphasenbettreaktor, wobei die Vorrichtung mit Mitteln zur Filtration ausgestattet ist, die dazu bestimmt sind, ein Filtrat von den Katalysatorfeststoffteilchen zu trennen, wobei die Mittel mindestens einen Filtereinsatz umfassen, der in einer Filtrationszone im Innern des Reaktors angebracht ist, wobei der Filtereinsatz Folgendes umfasst:
- einen Filter (7), der dazu bestimmt ist, das Filtrat von den Katalysatorfeststoffteilchen zu trennen,
- ein zylinderförmiges Gehäuse (2),
- ein inneres Element, das die Form eines Hohlzylinders hat, der an seinen Enden offen ist, und, bezogen auf die Längsachse des Gehäuses, auf im Wesentlichen koaxiale Weise angebracht auf,
- eine ringförmige Kammer (5), die von dem Gehäuse und den Wänden des inneren Elements begrenzt ist, wobei die Kammer dazu bestimmt ist, das Filtrat aufzunehmen, und
- eine Leitung zum Abführen (4) des Filtrats,
wobei die Wände des inneren Elements des Filtereinsatzes mindestens teilweise aus dem Filter des Einsatzes bestehen, und wobei die Filtrationszone einem ring förmigen Raum in dem Dreiphasenbett des Reaktors entspricht, wobei der ringförmige Raum durch einen Radius begrenzt ist, der durch das Verhältnis zur Längsachse des Reaktors bestimmt wird, im Bereich zwischen 0,7*R und R, wobei R der Innenradius des Reaktors ist.

2. Vorrichtung nach Anspruch 1, wobei der Filtereinsatz derart positioniert ist, dass seine Längsachse parallel zur Längsachse des Reaktors ist.

3. Vorrichtung nach irgendeinem der Ansprüche 1 oder 2, wobei eine Vielzahl von Filtereinsätzen um die Längsachse des Reaktors, am äußeren Rand des Reaktors und auf gleicher radialer Position verteilt ist.

4. Vorrichtung nach irgendeinem der Ansprüche 1 bis 3, wobei mehrere Etagen von Filtereinsätzen in unterschiedlichen Ebenen in dem Bett des Reaktors verteilt sind.

5. Vorrichtung nach irgendeinem der Ansprüche 1 bis 3, wobei die Filterein- sätze auf einer einzigen Ebene verteilt sind.

6. Vorrichtung nach irgendeinem der Ansprüche 1 bis 5, wobei die Etage oder jede Etage von Filtereinsätzen in dem oberen Teil des Betts angeordnet ist.

7. Vorrichtung nach irgendeinem der Ansprüche 1 bis 6, wobei der Reaktor einen oder mehrere Wärmeaustauscher umfasst.

8. Vorrichtung nach Anspruch 7, wobei der oder die Austauscher röhrenförmig sind.

9. Vorrichtung nach irgendeinem der Ansprüche 7 oder 8, wobei der oder die Wärmeaustauscher entlang der Längsachse des Reaktors liegen, und die Filtereinsätze am äußeren Rand des Dreiphasenbetts des Reaktors angeordnet sind.

10. Vorrichtung nach irgendeinem der Ansprüche 1 bis 9, wobei der Filtrationsstrom der Filtereinsätze von 250 bis 1.000 l/h.m² variieren kann.

11. Vorrichtung nach irgendeinem der Ansprüche 1 bis 10, wobei der Filter aus einem oder mehreren Materialien ausgeführt ist, ausgewählt aus der Gruppe bestehend aus Edelstahl oder Kohlenstoffstahl.

12. Vorrichtung nach irgendeinem der Ansprüche 1 bis 11, wobei die Filtrationsschwelle im Bereich zwischen 1 und 100 µm liegen kann.

13. Vorrichtung nach irgendeinem der Ansprüche 1 bis 12, wobei die tangentiale Strömungsgeschwindigkeit entlang der Wände des Filters des inneren Elements von 0,5 bis 10 m/s variiert.

14. Vorrichtung nach irgendeinem der Ansprüche 1 bis 13, wobei sich ein Kuchen aus Feststoffen bildet, und der Anteil der Katalysatorfeststoffteilchen in dem Kuchen bezogen auf die Gesamtheit des Katalysators in dem Reaktor kleiner als 2 %.

15. Vorrichtung nach irgendeinem der Ansprüche 1 bis 14, wobei der Katalysator auf Cobalt oder Eisen basiert.

## Claims

1. Apparatus for the production of liquid hydrocarbons by Fischer-Tropsch synthesis on solid catalyst particles in a three-phase bed reactor, the apparatus being provided with filtration means intended to separate a filtrate from the solid catalyst particles, said means comprising at least one filter cartridge mounted in a filtration zone in the interior of said reactor, the filter cartridge comprising:
- a filter (3) intended to separate the filtrate from the solid catalyst particles,
- a cylindrical casing (2),
- an internal element in the form of a hollow cylinder open at its ends and mounted in substantially coaxial relationship with the longitudinal axis of the casing,
- an annular chamber (3) delimited by the casing and the walls of the internal element, said chamber being intended to collect the filtrate, and
- a conduit (4) for discharge of said filtrate,
wherein the walls of the internal element of the filter cartridge are at least in part formed by the filter of the cartridge, and wherein the filtration zone corresponds to an annular space in the three-phase bed of said reactor, said annular space being delimited by a radius, defined with respect to the longitudinal axis of the reactor, of between 0.7*R and R, R being the inside radius of the reactor.

2. Apparatus according to claim 1 wherein the filter cartridge is positioned in such a way that its longitudinal axis is parallel to the longitudinal axis of the reactor.

3. Apparatus according to any one of claims 1 or 2, wherein a plurality of filter cartridges is distributed around the longitudinal axis of the reactor, at the periphery of said reactor and at an identical radial position.

4. Apparatus according to any one of claims 1 to 3, wherein a plurality of stages of filter cartridges are distributed at different levels in the bed of the reactor.

5. Apparatus according to any one of claims 1 to 3, wherein the filter cartridges are distributed over a single level.

6. Apparatus according to any one of claims 1 to 5, wherein the stage or each stage of filter cartridges is disposed in the top part of the bed.

7. Apparatus according to any one of claims 1 to 6, wherein the reactor comprises one or more heat exchangers.

8. Apparatus according to claim 7, wherein the exchanger or exchangers is or are tubular.

9. Apparatus according to either one of claims 7 or 8, wherein the heat exchanger or exchangers is or are located along the longitudinal axis of the reactor and the filter cartridges are disposed at the periphery of the three-phase bed of said reactor.

10. Apparatus according to any one of claims 1 to 9, wherein the filtration flow of the filter cartridges can vary from 250 to 1000 l/h.m².

11. Apparatus according to any one of claims 1 to 10, wherein the filter is made from one or more materials selected from the group formed by stainless steels or carbon steels.

12. Apparatus according to any one of claims 1 to 11, wherein the filtration threshold of the filter is between 1 and 100 µm.

13. Apparatus according to any one of claims 1 to 12, wherein the tangential flow speed along the walls of the filter of the internal element varies from 0.5 to 10 m/s.

14. Apparatus according to any one of claims 1 to 13, wherein a cake of solid particles is formed and the proportion of solid catalyst particles in said cake with respect to the totality of the catalyst in the reactor is less than 2%.

15. Apparatus according to any one of claims 1 to 14, wherein the catalyst is based on cobalt or iron.
